# EUROPÄISCHE PATENTSCHRIFT

(11) **EP 2 394 936 B1**
(45) Veröffentlichungstag und Bekanntmachung des Hinweises auf die Patenterteilung: **22.08.2012**
(21) Anmeldenummer: 11004164.7
(22) Anmeldetag: 19.05.2011
(51) Int. Cl.: B65G 47/90, B25J 15/12

(54) **Spannvorrichtung**
Tensioning device
Dispositif de serrage

(30) Priorität: 10.06.2010 DE 102010023337
(43) Veröffentlichungstag der Anmeldung: 14.12.2011
(73) Patentinhaber: Multivac Sepp Haggenmüller GmbH & Co. KG, 87787 Wolfertschwenden (DE)
(72) Erfinder: Carré, Lionel, 87637 Seeg (DE); Lang, Michael, 87642 Halblech (Buching) (DE); Mühlschlegel, Johannes, 88319 Aitrach (DE)
(74) Vertreter: Grünecker, Kinkeldey, Stockmair & Schwanhäusser

(56) Entgegenhaltungen:
- EP-A1- 1 986 941
- WO-A1-2009/026925
- DE-A1-102008 023 762

## Beschreibung

Die Erfindung bezieht sich auf eine Spannvorrichtung, die beispielsweise zum Spannen eines endlosen Transportgurts in automatischen Greifersystemen eingesetzt werden kann, gemäß dem Oberbegriff des Anspruchs 1, wie sie aus der EP 19 86 941 A1 bekannt ist.

Ein automatisches Greifersystem mit einem Transportgurt geht beispielsweise aus der EP 1 986 941 A1 hervor. Dieses Greifersystem verfügt über eine starre Platte, die unter einen zu transportierenden, weichen oder empfindlichen Gegenstand geschoben wird. Um dabei eine Deformation des Gegenstands zu vermeiden, ist ein Transportgurt um die Platte herumgelegt. Wenn die Platte unter den Gegenstand geschoben wird, bewegt sich der Transportgurt relativ zur Platte, aber nicht relativ zum Gegenstand. Auf diese Weise wird eine Reibung zwischen dem Gegenstand und der Transportplatte vermieden.

Hinsichtlich des Transportgurts gibt es in der EP 1 986 941 B1 zwei unterschiedliche Varianten. In der einen Variante ist der Transportgurt vorgespannt. Dabei ist es jedoch erforderlich, dass die beiden Enden des Transportgurts an unterschiedlichen Punkten im Greifersystem befestigt sind, und dass eine Spannvorrichtung an einem Ende des Transportgurts angreift. Bei der anderen Variante ist der Transportgurt zu einem endlosen Transportgurt um die Greiferplatte geschlossen. Bei dieser Ausführungsform ist jedoch keine Spannvorrichtung vorgesehen, da kein freies Ende des Transportgurts vorliegt, an dem eine Spannvorrichtung angreifen könnte.

Aufgabe der vorliegenden Erfindung ist es, eine Spannvorrichtung auch für einen endlosen Transportgurt vorzusehen, im Hinblick auf einen Einsatz in einem Greifersystem.

Diese Aufgabe wird gelöst durch eine Spannvorrichtung mit den Merkmalen des Anspruchs 1 bzw. durch ein Greifersystem mit den Merkmalen des Anspruchs 13. Die Erfindung gibt ferner auch ein Verfahren zum Herstellen einer solchen Spannvorrichtung mit den Merkmalen des Anspruchs 14 an. Vorteilhafte Weiterbildungen der Erfindung sind in den Unteransprüchen angegeben.

Die erfindungsgemäße Spannvorrichtung weist zwei Spannkanten auf, um die der Transportgurt umlenkbar ist, und mindestens einen einstückig mit den Spannkanten ausgebildeten und zwischen den beiden Spannkanten angeordneten Federabschnitt. Dadurch ergeben sich gleich mehrere Vorteile:
- Im Gegensatz zur herkömmlichen Spannvorrichtung wirkt die erfindungsgemäße Spannvorrichtung nicht nur auf ein Ende eines Transportgurts, sondern über die beiden Spannkanten auf zwei verschiedene Bereiche des Transportgurts. Folglich wird der Transportgurt gleichmäßiger gespannt.
- Die Spannvorrichtung ist im Inneren des endlosen Transportgurts angeordnet, sodass die erfindungsgemäße Spannvorrichtung einen vergleichsweise kleinen Bauraum erfordert.
- Durch die Spannung des Transportgurts werden auch bei einem endlosen Transportgurt Durchhänger oder Aufwölbungen vermieden. Stattdessen steht eine ebene Transportoberfläche zur Verfügung.
- Die durch die Spannvorrichtung ausgeübte Spannkraft kann so stark sein, dass die zu transportierenden Gegenstände allein durch den gespannten Transportgurt getragen werden, sodass eine zusätzliche Greiferplatte wie im Stand der Technik entfallen kann.
- Durch die einstückige Ausbildung der Spannkanten mit dem mindestens einen Federabschnitt wird die Spannvorrichtung besonders gut reinigbar, sodass sie sich auch in hygienekritischen Bereichen wie bei einem Transport von Lebensmitteln hervorragend einsetzen lässt.

Um eine besonders gute Verteilung der Spannkräfte zu erreichen, können nicht nur ein, sondern zwei Federabschnitte vorgesehen sein.

Noch weiter lassen sich inhomogene Spannkräfte vermeiden, wenn die vorhandenen Federabschnitte in einer Richtung parallel zu den Spannkanten symmetrisch über die Spannvorrichtung verteilt sind. Beispielsweise könnte an einem ersten Ende der Spannkanten ein erster Federabschnitt und an einem gegenüberliegenden Ende der Spannkanten ein zweiter Federabschnitt vorgesehen sein.

In einer bevorzugten Ausführungsvariante ist ein Federabschnitt Omega-förmig ausgebildet, um über eine vergleichsweise kurze Distanz genügend hohe Federkräfte aufbringen zu können.

Alternativ dazu könnte ein Federabschnitt auf S-förmig, Z-förmig oder Doppel-S-förmig ausgebildet sein, wobei Letzteres einer Form entspricht, bei der zwei S-förmige Abschnitte spiegelverkehrt aneinander liegen.

Zweckmäßig ist es, wenn zwischen den beiden Spannkanten zwei miteinander kontaktierbare Überdehnungsanschläge vorgesehen sind. Auf diese Weise wird vermieden, dass die Federabschnitte bei zu starker Belastung im plastischen Bereich deformiert werden.

Die Überdehnungsanschläge können beispielsweise einen Abstand von 3 bis 12 mm voneinander haben, vorzugsweise von 4 bis 8 mm.

Ein Überdehnungsanschlag kann durch einen plattenförmigen Abschnitt und/oder durch Streben mit der benachbarten Spannkante verbunden sein. Die Ausbildung durch Streben hat dabei den Vorteil, dass weniger Material benötigt wird, sodass die Spannvorrichtung leichter wird.

Die Überdehnungsanschläge können auch in Form von ineinander greifenden Fingern vorgesehen sein.

Die Spannvorrichtung muss einander widerstrebenden Anforderungen gerecht werden. Zum einen muss sie fest genug sein, um die Federkräfte an den Spannkanten auf den Transportgurt übertragen zu können. Zum anderen muss das Material der Spannvorrichtung - bedingt durch die einstückige Ausbildung der Federabschnitte mit den Spannkanten - elastisch genug sein, um in den Federabschnitten geeignete Federkräfte entstehen zu lassen. Zweckmäßig ist es zum Erfüllen dieser Anforderungen, wenn das Elastizitätsmodul des Materials der Spannvorrichtung im Bereich von 2.500 MPa bis 3.200 MPa liegt.

Vorzugsweise ist die Spannvorrichtung aus einem Kunststoff hergestellt, da Kunststoffe gleichzeitig sowohl leicht, als auch gut zu reinigen sein können und zudem ein geeignetes Elastizitätsmodul aufweisen können. Als Material für die Spannvorrichtung sind Polyoximethylen (POM) und/oder Polyethylen (PE) besonders geeignet. Dabei bietet POM den Vorteil, in Varianten mit einem Schmelzindex von maximal 50 Gramm/10 Minuten für den Kontakt mit Lebensmitteln zugelassen zu sein, sodass die damit ausgebildete Spannvorrichtung auch im Lebensmittelbereich eingesetzt werden kann.

Wenn die Spannkanten, der mindestens eine Federabschnitt und ggf. die Überdehnungsanschläge eine durchgehend konstante Materialstärke haben, wird die erfindungsgemäße Spannvorrichtung besonders stabil und leicht herstellbar, da sie beispielsweise aus einer gemeinsamen Platte herstellbar ist.

Die Materialstärke kann dabei zum Beispiel von 2 mm bis 5 mm betragen.

In einer Ausführungsvariante ist ein Lagerelement auf die Spannvorrichtung aufsteckbar. Dieses Lagerelement kann als Dreh- und Führungspunkt für die Spannvorrichtung und den darauf vorgesehenen Transportgurt dienen. Die Aufsteckbarkeit ermöglicht es, ein Lagerelement aus einem anderen Material als im restlichen Bereich der Spannvorrichtung vorzusehen und das Lagerelement zu Reinigungszwecken abzunehmen.

Die Erfindung bezieht sich auch auf ein Greifersystem mit einem Transportgurt zum Auf nehmen oder Transportieren von Produkten, beispielsweise von Lebensmitteln, und mit einer Spannvorrichtung der vorstehend beschriebenen Art. Dieses Greifersystem hat den Vorteil, eine gleichmäßige Spannung des Transportgurts zu bieten, ohne dass eine über den Transportgurt vorstehende Spannvorrichtung vorgesehen wäre.

Das Greifersystem kann weiter dadurch verbessert werden, dass ein Führungselement für die Spannvorrichtung (beispielsweise eine Führungsstange) mit Federspannung in einer Halterung gehalten ist. Auf diese Weise kann das Führungselement mit der Spannvorrichtung leicht entfernt und ausgewechselt werden, während es gleichzeitig im Betrieb des Greifersystems sicher gehalten ist.

Die Erfindung bezieht sich auch auf ein Verfahren zum Herstellen einer Spannvorrichtung für einen endlosen Transportgurt, wobei aus einer Platte vorgegebene Bereiche entfernt werden, sodass die Platte zwei Spannkanten, um die der Transportgurt umlenkbar ist, und mindestens einen einstückig mit den Spannkanten ausgebildeten und zwischen den beiden Spannkanten angeordneten Federabschnitt erhält. Das Verfahren hat den Vorteil, dass durch das Verwenden einer Platte als Werkstück von vornherein eine gleichmäßige Materialstärke sichergestellt ist. Das Entfernen der vorgegebenen Bereiche kann durch Ausstanzen oder durch Schneiden erfolgen, beispielsweise mit einem Laserstrahl oder mit einem Wasserstrahl. Denkbar wäre alternativ auch ein Spritzgießen der Spannvorrichtung.

Im Folgenden werden vorteilhafte Ausführungsbeispiele der Erfindung anhand einer Zeichnung näher erläutert. Im Einzelnen zeigen:
- Figur 1: eine perspektivische Ansicht eines erfindungsgemäßen Greifersystems,
- Figur 2: eine Seitenansicht des erfindungsgemäßen Greifersystems in geöffnetem Zustand,
- Figur 3: eine Seitenansicht des Greifersystems bei aufeinander zu bewegten Greiferarmen,
- Figur 4: ein erstes Ausführungsbeispiel einer erfindungsgemäßen Spannvorrichtung,
- Figur 5: ein zweites Ausführungsbeispiel einer erfindungsgemäßen Spannvorrichtung und
- Figur 6: eine erfindungsgemäße Spannvorrichtung mit einem Transportgurt.

Gleiche Komponenten sind in den Figuren durchgängig mit gleichen Bezugszeichen versehen.

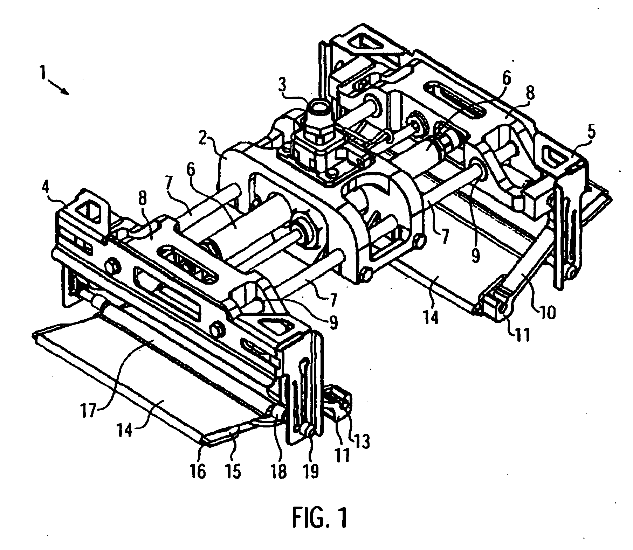

Figur 1 zeigt in perspektivischer Ansicht ein erfindungsgemäßes Greifersystem 1. Es kann zum Erfassen und Transportieren von Produkten eingesetzt werden, beispielsweise von Lebensmitteln.

Das Greifersystem 1 verfügt über einen Zentralkörper 2. Die Strom- und ggf. die Druckluftversorgung des Greifersystems 1 erfolgt über einen Anschluss 3 auf der Oberseite des Zentralkörpers 2. Wenn das Greifersystem 1 elektrisch betrieben wird, ist in dem Zentralkörper 2 ein Elektromotor angeordnet.

Auf zwei gegenüberliegenden Seiten des Zentralkörpers 2 befindet sich jeweils ein Ausleger 4, 5. Der jeweilige Ausleger 4, 5 ist über Auslegerarme 6 und Führungsstangen 7 mit dem Zentralkörper 2 verbunden. Die Führungsstangen 7 können sich durch den Zentralkörper 2 hindurch von einem Ausleger 4 zum anderen Ausleger 5 erstrecken.

Entlang der Führungsstangen 7 ist jeweils ein Gleiter 8 zwischen dem Zentralkörper 2 und einem Ausleger 4, 5 linear beweglich. Der Gleiter 8 verfügt zu diesem Zweck über Öffnungen 9, durch die sich die Führungsstangen 7 hindurch erstrecken.

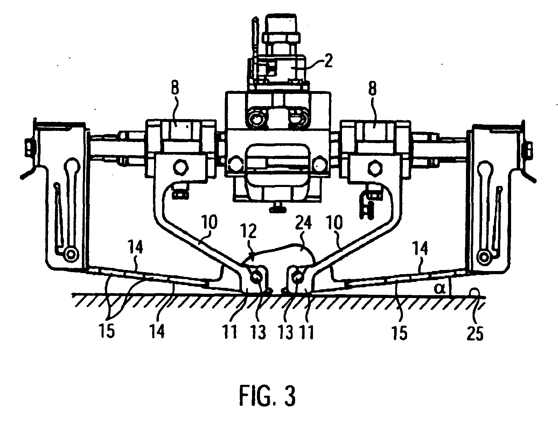

An jedem der beiden seitlichen Enden eines Gleiters 8 ist jeweils ein Tragarm 10 vorgesehen, dessen Form deutlicher aus Figur 3 hervorgeht. Der Tragarm 10 erstreckt sich vom Gleiter 8 aus zunächst in einem ersten Abschnitt nach unten, bevor ein zweiter Abschnitt des Tragarms 10 geneigt verläuft. Am unteren Ende jedes Tragarms 10 befindet sich ein Kopf 11 mit einer Aufnahme 12 für ein Lagerelement 13, dessen Funktion weiter unter erläutert werden wird.

Das Greifersystem 1 verfügt über zwei endlose Transportgurte 14 aus einem FDAkonformen, waschbaren Gewebe, insbesondere einem Filtergewebe. Die Transportgurte 14 können durch die Bewegung der Greifer 8 aufeinander zu bzw. voneinander fortbewegt werden, um sich unter einen zu transportierenden Gegenstand zu schieben bzw. um diesen Gegenstand wieder freizugeben. Jeder Transportgurt 14 erstreckt sich um eine generell plattenförmige, erfindungsgemäße Spannvorrichtung 15. Diese Spannvorrichtung 15 verfügt über eine vordere und eine hintere Spannkante 16, um die der Transportgurt 14 jeweils umgelenkt ist. Die beiden Spannkanten 16 erstrecken sich parallel zueinander und senkrecht zur Bewegungsrichtung der Gleiter 8 entlang der Führungsstangen 7. Die Spannkanten 16 können abgerundet sein, beispielsweise halbrund, um den Abrieb des Transportgurtes 14 an den Spannkanten 16 zu verringern.

Mit dem Transportgurt 14 ist eine Tasche 17 verbunden, die sich über die gesamte Breite des Transportgurts 14 erstreckt und an beiden Seiten offen ist. Durch die Tasche 17 erstreckt sich ein als Positionierstab ausgebildetes Positionierelement 18. Mit seinen verbreiterten Enden 19 erstreckt sich das Positionierelement 18 durch eine vertikal ausgerichtete Halterung 20, die seitlich an jedem der beiden Enden eines Auslegers 4, 5 vorgesehen ist. Die Halterung 20 weist einen Halterungsschlitz 21 auf, dessen oberes Ende 22 vergrößert ist. Insbesondere ist das obere Ende 22 des Halterungsschlitzes 21 so groß, dass sich das vergrößerte Ende 19 des Positionierelements 18 durch dieses obere Ende 22 hindurchbewegen kann, während es ansonsten breiter ist als der übrige Bereich des Halterungsschlitzes 21, der sich unterhalb des oberen Endes 22 befindet.

Einstückig mit der beispielsweise aus Edelstahl ausgebildeten Halterung 20 ist ein Federarm 23 ausgebildet, der sich in den Halterungsschlitz erstreckt. Dieser Federarm 23 wird ausgelenkt, wenn das Positionierelement 18 in den Halterungsschlitz 21 eingesetzt wird. Durch Andrücken des Positionierelements 18 an eine Wand des Halterungsschlitzes 21 sorgt der Federarm 23 im Betrieb des Greifersystems 1 für eine sichere Positionierung des Positionierelements 18, das seinerseits die es umgebende Tasche 17 des Transportgurtes 14 an einer definierten Position zwischen den beiden Halterungen 20 positioniert.

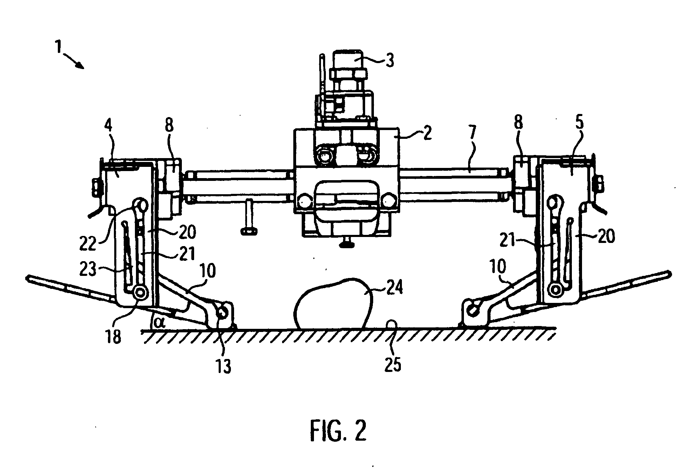

Figur 2 zeigt das Greifersystem 1 in einer Stellung, in der die beiden Gleiter 8 entlang der Führungsstangen 7 in ihre am Weitesten vom Zentralkörper 2 entfernte Position verfahren wurden. Das Greifersystem ist somit geöffnet, und es ist bereit zur Aufnahme eines zu transportierenden Gegenstandes 24, der sich auf einer Ablagefläche 25 befindet. Die Höhe der Positionierelemente 18 gegenüber der Ablagefläche 25 ist durch das Greifersystem 1 vorgegeben, insbesondere durch die Länge des Halterungsschlitzes 21 in der Halterung 20. Das Lagerelement 13 befindet sich in einer geringeren Höhe über der Ablagefläche 25 als das Positionierelement 18. In der in Figur 2 gezeigten, geöffneten Stellung des Greifersystems 1 nehmen die Lagerelemente 13 die minimale horizontale Distanz gegenüber den Positionierelementen 18 ein. Wegen dieser geometrischen Bedingungen ist der Winkel α zwischen dem Transportgurt 14 und der Ablagefläche 25 mit etwa 15 Grad in dieser Stellung maximal.

Figur 3 zeigt das Greifersystem 1 in einer Stellung, in der die Gleiter 8 auf den Zentralkörper 2 zu verfahren wurden. Bei dieser Bewegung schieben sich die Spannvorrichtungen 15 und die Transportgurte 14 unter den zu transportierenden Gegenstand 24. Dieser Gegenstand 24 wird nun vom Obertrum des jeweiligen Transportgurts 14 getragen. Während der Bewegung der Gleiter 8 bewegt sich der Transportgurt 14 um die jeweilige Spannvorrichtung 15, da die mit ihm verbundene Tasche 17 am Positionierelement 18 festgehalten wird. Auf diese Weise werden die Relativbewegung und damit die Reibung zwischen dem Transportgurt 14 und dem Gegenstand 24 minimiert. In der in Figur 3 gezeigten, geschlossenen Stellung des Greifersystems 1 haben die Lagerelemente 13 in horizontaler Richtung einen größeren Abstand von den Positionierelementen 18 als in der geöffneten Stellung. Folglich ist der Winkel α zwischen dem Transportgurt 14 und der Ablagefläche 25 kleiner als der in der in Figur 2 gezeigten geöffneten Stellung. In der geschlossenen Stellung des Greifersystems 1 beträgt der Winkel α nur noch etwa 6 Grad.

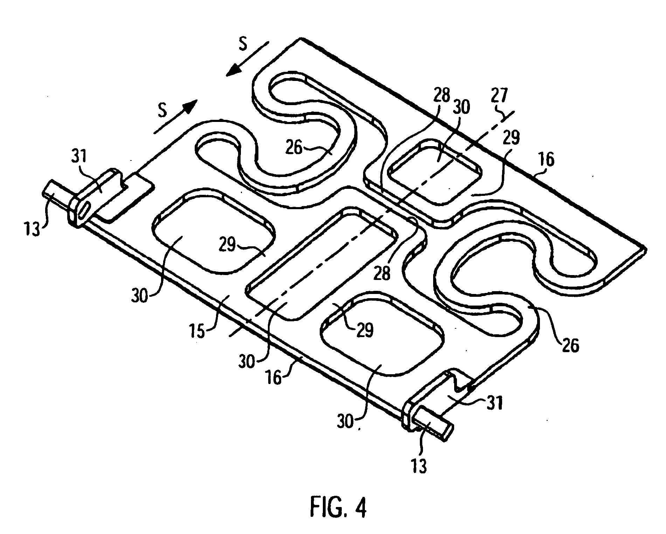

Figur 4 zeigt ein erstes Ausführungsbeispiel einer Spannvorrichtung 15, um die der Transportgurt 14 herumgelegt wird. Die Spannvorrichtung 15 ist durch Entfernen bestimmter Abschnitte aus einem plattenförmigen Material hergestellt, beispielsweise aus POM. Folglich hat sie überall eine konstante Stärke von beispielsweise drei Millimetern.

An den beiden Längsseiten der Spannvorrichtung 15 befinden sich zwei zueinander parallele Spannkanten 16, um die der Transportgurt 14 umgelenkt wird. Die Spannkanten 16 können insbesondere abgerundet sein, um den Abrieb des Transportgurts zu verringern. Zwischen den beiden Spannkanten 16 befinden sich zwei Federabschnitte 26, die einstückig mit den übrigen Bereichen der Spannvorrichtung 15 ausgebildet sind. Die Federabschnitte sind jeweils etwa Omega-förmig ausgebildet. Die gesamte Spannvorrichtung 15 ist spiegelsymmetrisch zu einer Mittelachse 27 ausgebildet. Folglich sind die beiden Federabschnitte 26 in einer Richtung parallel zu den Spannkanten 16 und damit senkrecht zur Mittelachse 27 symmetrisch angeordnet.

In Figur 4 befindet sich die Spannvorrichtung 15 in ihrer entspannten Stellung. In einer Spannrichtung S, d. h. in einer Richtung entlang der Mittelachse 27, können die beiden Spannkanten 16 jedoch aufeinander zu bewegt werden. Dabei werden die Federabschnitte 26 komprimiert, sodass sie eine nach außen gerichtete Federkraft auf die beiden Spannkanten 16 ausüben. Diese Federkraft ist proportional zu der Verschiebung der beiden Spannkanten 16 aufeinander zu.

Mittig zwischen den beiden Federabschnitten 26 befinden sich zwei miteinander kontaktierbare Überdehnungsanschläge 28. Diese Überdehnungsanschläge 28 haben voneinander einen Abstand von etwa 3 bis 12 mm. Sobald beim Verschieben der beiden Spannkanten 16 aufeinander zu dieser Abstand überbrückt wurde, geraten die beiden Überdehnungsanschläge 28 in Kontakt miteinander, sodass sie eine weitere Bewegung der Spannkanten 16 aufeinander zu verhindern. Auf diese Weise wird sichergestellt, dass die Federabschnitte 26 nur in ihrem elastischen Bereich verformt werden, nicht jedoch plastisch.

Jeder der beiden Überdehnungsanschläge 28 ist folglich einer der beiden Spannkanten 16 zugeordnet. Mit den beiden Spannkanten 16 sind die Überdehnungsanschläge 28 über Stege 29 verbunden, zwischen denen sich Öffnungen 30 befinden. Diese Öffnungen 30 könnten jedoch auch entfallen, sodass die Überdehnungsanschtäge 28 durch plattenförmige Abschnitte mit den jeweiligen Spannkanten 16 verbunden wären.

An den beiden kurzen Seiten der Spannvorrichtung 15 ist jeweils ein Lagerelement 13 aufgesteckt. Zu diesem Zweck ist das Lagerelement 13 mit einem Halter 31 verbunden, der in eine geeignete Öffnung in der Spannvorrichtung 15 eingesetzt werden kann. Das Lagerelement 13 kann einstückig mit dem Halter 31 ausgebildet sein, beispielsweise aus einem Metall. Das Lagerelement 13 selbst hat einen etwa rechteckigen Querschnitt mit abgerundeten Längsseiten. Der rechteckige Querschnitt ermöglicht es, das Lagerelement 13 von oben in die Aufnahme 12 im Kopf 11 des Tragarms 10 einzusetzen - allerdings nur in einer Stellung, bei der der rechteckige Querschnitt des Lagerelements 13 in Längsrichtung der Aufnahme 12 ausgerichtet ist. Anschließend wird die Spannvorrichtung 15 mit dem damit verbundenen Lagerelement 13 in die in den Figuren 2 und 3 gezeigte Stellung gedreht. In dieser Stellung kann sich das Lagerelement 13 zwar noch in dem unteren Bereich der Aufnahme 12 drehen, wenn die Gleiter 8 entlang der Führungsstangen 7 verfahren. Das Lagerelement 13 kann sich jedoch nicht mehr nach oben aus der Aufnahme 12 entfernen.

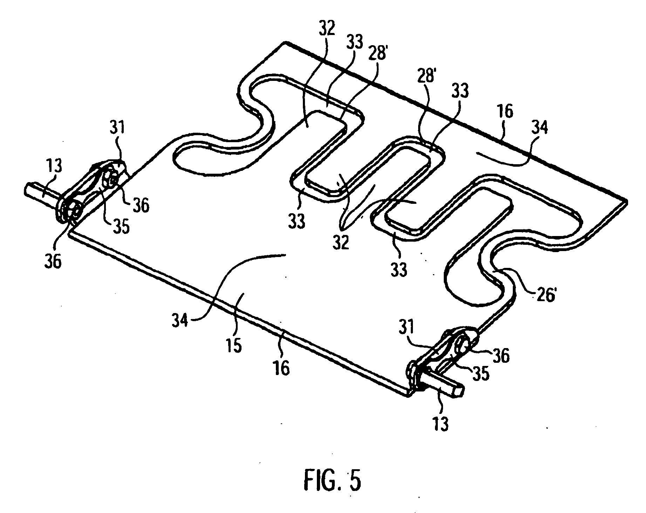

Figur 5 zeigt ein anderes Ausführungsbeispiel einer Spannvorrichtung 15. In diesem Ausführungsbeispiel sind die Federabschnitte 26' nicht mehr Omega-förmig, sondern doppel-S-förmig ausgebildet, wobei die beiden S-förmigen Abschnitte der Federabschnitte 26' umgekehrt aneinander liegen.

Ein weiterer Unterschied zum Ausführungsbeispiel gemäß Figur 4 besteht darin, dass die beiden Überdehnungsanschläge 28' jeweils mehrere Finger 32 aufweisen, die in entsprechende Aussparungen 32 im gegenüberliegenden Abschnitt der Spannvorrichtung 15 eingreifen. Der eine Überdehnungsanschlag 28' weist zwei Finger 32 auf, während der andere Überdehnungsanschlag 28' drei Finger 33 und dazwischen zwei Aussparungen 33 zur Aufnahme der Finger 32 des anderen Überdehnungsanschlags 28' aufweist. In diesem Ausführungsbeispiel sind die Überdehnungsanschläge 28' durch plattenförmige Abschnitte 34 mit den jeweils zugeordneten Spannkanten 16 verbunden, da die Öffnungen 30 entfallen sind. Zwischen den Fingern 32 und dem gegenüberliegenden Boden der zugeordneten Aussparung 33 beträgt der Abstand zwischen 3 und 12 mm, beispielsweise zwischen 4 und 8 mm. Sobald dieser Abstand überbrückt wurde, können die beiden Spannkanten 16 nicht mehr weiter aufeinander zubewegt werden.

Ein weiterer Unterschied gegenüber dem Ausführungsbeispiel gemäß Figur 4 besteht darin, dass im Ausführungsbeispiel der Spannvorrichtung 15 gemäß Figur 5 die Halter 31 als seitliche Flansche einstückig mit dem übrigen Bereich der Spannvorrichtung 15 ausgebildet sind. Durch Befestigungsplatten 35 und Nieten oder Schrauben 36 werden die Lagerelemente 13 an den Halterungsflanschen 31 befestigt.

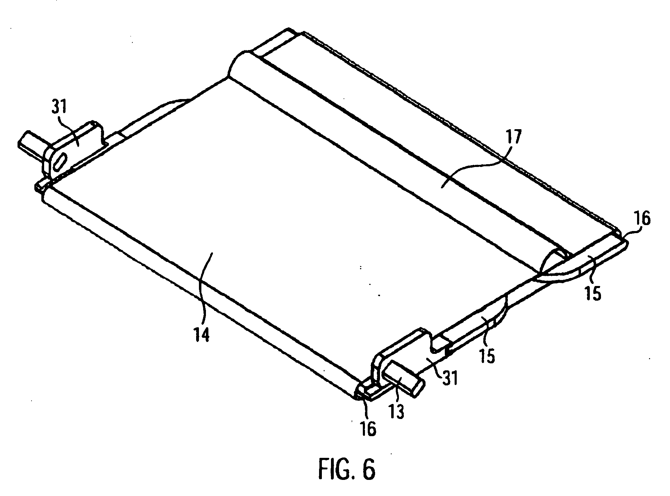

Figur 6 zeigt die erfindungsgemäße Spannvorrichtung 15 mit einem um die Spannkanten 16 gelegten, endlosen Transportgurt 14. An dem Transportgurt 14 ist eine röhrenförmige Tasche 17 vorgesehen, durch die sich das Positionierelement 18 hindurch erstrecken kann. Die Länge des Transportgurts 14 entspricht etwa dem doppelten Abstand zwischen den beiden Spannkanten 16, sodass der Transportgurt 14 leicht durch die Spannvorrichtung 15 unter Spannung gesetzt ist. Auf diese Weise wird eine glatte, ebene Oberfläche des Transportgurts 14 erzielt. Die Breite des Transportgurts 14 ist etwas geringer als der Abstand zwischen den beiden Halterungen 31 für die Lagerelemente 13, damit an den Haltern 31 kein Abrieb des Transportgurts 14 stattfindet.

Die erfindungsgemäße Spannvorrichtung 15 kann hergestellt werden, indem aus einem beispielsweise rechteckigen, plattenförmigen Werkstück geeignete Bereiche entfernt werden, um die in den Figuren 4 oder 5 gezeigten Formen der Spannvorrichtung 15 zu erhalten. Das Entfernen der Bereiche kann durch eine Stanzvorrichtung oder durch ein geeignetes Schneiden erfolgen, beispielsweise mittels eines Lasers oder Wasserstrahls.

Ausgehend von der dargestellten Ausführungsbeispielen können das erfindungsgemäße Greifersystem 1 und die erfindungsgemäße Spannvorrichtung 15 in vielfacher Hinsicht abgewandelt werden. Beispielsweise können die Unterschiede der beiden in den Figuren 4 und 5 gezeigten Spannvorrichtungen 15 auch unabhängig voneinander verwirklicht werden. Die Federabschnitte 26 können auch eine andere Form haben, beispielsweise S-förmig oder Z-förmig. Bei.Überdehnungsanschlägen 28' mit mehreren Fingern 32 können auch mehr oder weniger Finger als in Figur 5 dargestellt vorgesehen werden.

## Patentansprüche

1. Spannvorrichtung (15) für einen endlosen Transportgurt (14) eines Greifersystems, wobei die Spannvorrichtung (15) zwei Spannkanten (16), um die der Transportgurt (14) umlenkbar ist, und mindestens einen Federabschnitt (26, 26') aufweist, **dadurch gekennzeichnet, dass** der Federabschnitt (26, 26') einstückig mit den Spannkanten (16) ausgebildet und zwischen den beiden Spannkanten (16) angeordnet ist.

2. Spannvorrichtung nach Anspruch 1, wobei zwei Federabschnitte (26, 26') vorgesehen sind.

3. Spannvorrichtung nach einem der vorangehenden Ansprüche, wobei die vorhandenen Federabschnitte (26, 26') in einer Richtung parallel zu den Spannkanten (16) symmetrisch verteilt sind.

4. Spannvorrichtung nach einem der vorangehenden Ansprüche, wobei ein Federabschnitt (26) Omega-förmig ausgebildet ist.

5. Spannvorrichtung nach einem der vorangehenden Ansprüche, wobei ein Federabschnitt (26') S-förmig, doppel-S-förmig oder Z-förmig ausgebildet ist.

6. Spannvorrichtung nach einem der vorangehenden Ansprüche, wobei zwischen den beiden Spannkanten (16) zwei miteinander kontaktierbare Überdehnungsanschläge (28, 28') vorgesehen sind.

7. Spannvorrichtung nach Anspruch 6, wobei die Überdehnungsanschläge (28, 28') einen Abstand von 3 bis 12 mm voneinander haben, vorzugsweise von 4 bis 8 mm.

8. Spannvorrichtung nach einem der Ansprüche 6 oder 7, wobei ein Überdehnungsanschlag (28, 28') durch einen plattenförmigen Abschnitt (34) und/oder durch Streben (29) mit der benachbarten Spannkante (16) verbunden ist.

9. Spannvorrichtung nach einem der vorangehenden Ansprüche, wobei die Spannvorrichtung (15) aus einem Kunststoff hergestellt ist.

10. Spannvorrichtung nach einem der vorangehenden Ansprüche, wobei die Spannkanten (16), der mindestens eine Federabschnitt (26, 26') und ggf. die Überdehnungsanschläge (28, 28') eine durchgehend konstante Materialstärke haben.

11. Spannvorrichtung nach Anspruch 10, wobei die Materialstärke 2 mm bis 5 mm beträgt.

12. Spannvorrichtung nach einem der vorangehenden Ansprüche, wobei ein Lagerelement (13) auf die Spannvorrichtung (15) aufsteckbar ist.

13. Greifersystem (1) mit einem Transportgurt (14) zum Aufnehmen oder Transportieren von Produkten (24), und mit einer Spannvorrichtung (15) nach einem der vorangehenden Ansprüche.

14. Verfahren zum Herstellen einer Spannvorrichtung (15) für einen endlosen Transportgurt (14) eines Greifersystems, wobei aus einer Platte vorgegebene Bereiche entfernt werden, so dass die Platte zwei Spannkanten (16), um die der Transportgurt (14) umlenkbar ist, und mindestens einen einstückig mit den Spannkanten (16) ausgebildeten und zwischen den beiden Spannkanten (16) angeordneten Federabschnitt (26, 26') erhält.

## Claims

1. A tensioning device (15) for an endless conveyor belt (14) of a gripper system, the tensioning device (15) comprising two tensioning edges (16), about which the conveyor belt (14) may be deflected, and at least one spring portion (26, 26'), **characterised in that** the spring portion (26, 26') is constructed in one piece with the tensioning edges (16) and is arranged between the two tensioning edges (16).

2. A tensioning device according to claim 1, wherein two spring portions (26, 26') are provided.

3. A tensioning device according to any one of the preceding claims, wherein the spring portions (26, 26') present are distributed symmetrically in a direction parallel to the tensioning edges (16).

4. A tensioning device according to any one of the preceding claims, wherein one spring portion (26) is omega-shaped.

5. A tensioning device according to any one of the preceding claims, wherein one spring portion (26') is S-shaped, double-S-shaped or Z-shaped.

6. A tensioning device according to any one of the preceding claims, wherein two mutually contactable overstretch stops (28, 28') are provided between the two tensioning edges (16).

7. A tensioning device according to claim 6, wherein the overstretch stops (28, 28') are spaced by 3 to 12 mm from one another, preferably by 4 to 8 mm.

8. A tensioning device according to either one of claims 6 or 7, wherein an overstretch stop (28, 28') is connected by a plate-shaped portion (34) and/or by struts (29) with the adjacent tensioning edge (16).

9. A tensioning device according to any one of the preceding claims, wherein the tensioning device (15) is made of a plastics material.

10. A tensioning device according to any one of the preceding claims, wherein the tensioning edges (16), the at least one spring portion (26, 26') and optionally the overstretch stops (28, 28') are of a constant material thickness throughout.

11. A tensioning device according to claim 10, wherein the material thickness amounts to 2 mm to 5 mm.

12. A tensioning device according to any one of the preceding claims, wherein a bearing element (13) may be attached to the tensioning device (15).

13. A gripper system (1) with a conveyor belt (14) for picking up or conveying products (24), and with a tensioning device (15) according to any one of the preceding claims.

14. A method of producing a tensioning device (15) for an endless conveyor belt (14) of a gripper system, wherein given zones are removed from a plate, such that the plate is provided with two tensioning edges (16), about which the conveyor belt (14) may be deflected, and obtains at least one spring portion (26, 26') constructed in one piece with the tensioning edges (16) and arranged between the two tensioning edges (16).

## Revendications

1. Dispositif de tension (15) pour une courroie de transport sans fin (14) d'un système de préhension, étant précisé que le dispositif de tension (15) présente deux bords de tension (16) sur lesquels la courroie de transport (14) est apte à être déviée, et au moins une section à ressort (26, 26'), **caractérisé en ce que** la section à ressort (26, 26') est réalisée d'une seule pièce avec les bords de tension (16) et est disposée entre les deux bords de tension (16).

2. Dispositif de tension selon la revendication 1, étant précisé qu'il est prévu deux sections à ressort (26, 26').

3. Dispositif de tension selon l'une des revendications précédentes, étant précisé que les sections à ressort (26, 26') prévues sont réparties symétriquement dans un sens parallèle aux bords de tension (16).

4. Dispositif de tension selon l'une des revendications précédentes, étant précisé qu'une section à ressort (26) a la forme d'un oméga.

5. Dispositif de tension selon l'une des revendications précédentes, étant précisé qu'une section à ressort (26') a la forme d'un S, d'un double S ou d'un Z.

6. Dispositif de tension selon l'une des revendications précédentes, étant précisé qu'il est prévu entre les deux bords de tension (16) deux butées d'allongement excessif (28, 28') aptes à venir en contact l'une avec l'autre.

7. Dispositif de tension selon la revendication 6, étant précisé que les butées d'allongement excessif (28, 28') ont un écartement de 3 à 12 mm, de préférence de 4 à 8 mm.

8. Dispositif de tension selon l'une des revendications 6 ou 7, étant précisé qu'une butée d'allongement excessif (28, 28') est reliée par une section en forme de plaque (34) et/ou par des traverses (29) au bord de tension (16) voisin.

9. Dispositif de tension selon l'une des revendications précédentes, étant précisé que le dispositif de tension (15) est fabriqué à partir d'une matière plastique.

10. Dispositif de tension selon l'une des revendications précédentes, étant précisé que les bords de tension (16), la ou les sections à ressort (26, 26') et éventuellement les butées d'allongement excessif (28, 28') ont une épaisseur de matériau constante d'un bout à l'autre.

11. Dispositif de tension selon la revendication 10, étant précisé que l'épaisseur de matériau est de 2 mm à 5 mm.

12. Dispositif de tension selon l'une des revendications précédentes, étant précisé qu'un élément d'appui (13) est apte à être enfilé sur le dispositif de tension (15).

13. Système de préhension (1) avec une courroie de transport (14) pour recevoir ou transporter des produits (24), et un dispositif de tension (15) selon l'une des revendications précédentes.

14. Procédé pour fabriquer un dispositif de tension (15) pour une courroie de transport sans fin (14) d'un dispositif de préhension, étant précisé que des zones prédéfinies sont enlevées d'une plaque, de sorte que la plaque présente deux bords de tension (16) sur lesquels la courroie (14) peut être déviée, et au moins une section à ressort (26, 26') qui est réalisée d'une seule pièce avec les bords de tension (16) et qui est disposée entre les deux bords de tension (16).
